# EUROPEAN PATENT SPECIFICATION

(11) **EP 2 323 202 B1**
(45) Date of publication and mention of the grant of the patent: **27.01.2016**
(21) Application number: 10178594.7
(22) Date of filing: 23.09.2010
(51) Int. Cl.: H01M 4/02, H01M 4/74, H01M 10/04, H01M 10/0525, H01M 10/0585, H01M 4/13, H01M 4/583, H01M 4/58, H01M 4/66, H01M 4/505, H01M 4/525, H01M 4/485, H01M 4/131

(54) **Electrode assembly**
Elektrodenanordnung
Ensemble formant électrode

(30) Priority: 16.11.2009 US 261724 P; 08.09.2010 US 877981
(43) Date of publication of application: 18.05.2011
(73) Proprietor: Samsung SDI Co., Ltd., Gyeonggi-do (KR)
(72) Inventor: Han, Man-Seok, Gyeonggi-do (KR); Hong, Jin-Kyu, Gyeonggi-do (KR); Kim, Sung-Soo, Gyeonggi-do (KR); Choi, Nam-Soon, Gyeonggi-do (KR); Roh, Sae-Weon, Gyeonggi-do (KR); Hur, So-Hyun, Gyeonggi-do (KR)
(74) Representative: Walaski, Jan Filip

(56) References cited:
- EP-A1- 1 014 466
- EP-A2- 1 487 034
- WO-A1-97/08769
- WO-A1-99/60651
- US-A1- 2007 134 556

## Description

The invention relates to an electrode assembly for a rechargeable battery.

A rechargeable battery can be recharged and discharged, unlike a primary battery that cannot be recharged. A low capacity rechargeable battery is used for a small portable electronic device such as a mobile phone, a laptop computer, and a camcorder, and a large capacity rechargeable battery is used as an electrical source or a power storage source for driving a motor such as for a hybrid vehicle.

A large capacity high power rechargeable battery with high energy density using a non-aqueous electrolyte has been developed, and the rechargeable battery is formed with a large capacity high power rechargeable battery module by coupling a plurality of rechargeable batteries in series or in parallel in order to use it to drive a device, for example, a motor such as an electric vehicle requiring a large amount of electric power. The rechargeable battery may be fabricated in a cylindrical shape, a prismatic shape, a pouch shape, and the like. In a rechargeable battery, active material layers are coated on both sides of positive and negative electrodes.

Outer active material layers of outermost electrodes of a stacked-type rechargeable battery do not participate in charge and discharge reaction and are not needed.

However, if the unnecessary outer active material layer is removed, electrodes may be bent during compressing after coating. During electrode fabrication, one-side coating process and assembling process related thereto are added to a general fabrication process. Considering these, outermost electrode generally includes active material layers coated on both side of the electrode. However, this may incur increase of weight and volume resulting in decrease of energy density. It also has a problem of waste of active materials.

One aspect of the present invention provides a rechargeable battery having high energy density.

EP 1 014 466 discloses solid state polymer batteries having active material coated on the current collectors.

According to an aspect of the invention, there is provided an electrode assembly according to claim 1.

Embodiments provide an electrode assembly for a rechargeable battery, comprising a plurality of positive and negative electrodes in the form of a stack, adjacent positive and negative electrodes having a separator between them, each of the positive and negative electrodes comprising a current collector and an active material layer on the current collector, wherein an outermost electrode in the stack comprises a first active material layer on both sides of the current collector, and the thickness of the first active material layer in the outermost electrode is less than the thickness of a second active material layer in an electrode other than the outermost electrode.

The first active material layer may be about half as thick as the second active material layer.

The current collector in the outermost electrode are in the form of a mesh. The current collector in the electrodes in the stack other than the outermost electrode are in the form of a mesh. The size of the openings in the mesh current collector in the outermost electrode are larger than the size of the openings in the mesh current collector in the electrodes other than the outermost electrode. A larger opening size in the outermost electrode allows for more adhesive to hold the active layer compared with other electrodes in the stack, where conductivity is more important than in the outermost electrode.

The openings in the mesh current collector in the outermost electrode may be diamond-shaped.

The first active material layer in the outermost electrode may comprise a third active material layer on one side of the current collector and a fourth active material layer on the other side of the current collector.

The third and fourth active material layers may have different thicknesses.

The ratio of the thicknesses of the third active material layer to the fourth active material layer may be between about 1:10 and about 10:1. The ratio of the thicknesses of the third active material layer to the fourth active material layer may be between about 1:3 and about 3:1. The ratio of the thicknesses of the third active material layer to the fourth active material layer may be between about 1:2 and about 2:1.

The first active material layer and the second active material layer may comprise a positive active material. The outermost electrode may comprise a positive electrode and the adjacent electrode may comprise a negative electrode separated from the positive electrode by a separator.

A rechargeable battery may comprise a case, an electrode assembly as defined above in the case, and a positive terminal and a negative terminal connected to the electrode assembly.

According to one embodiment of the present invention, the energy density is improved, and the unnecessary raw material waste is prevented by forming a thinner active material layer on the outermost electrode.

Embodiments of the invention will now be described by way of example with reference to the accompanying drawings, in which:
FIG. 1 is a cross-sectional view of a rechargeable battery according to a first embodiment of the present invention.
FIG. 2 is a cross-sectional view of an electrode assembly of a rechargeable battery according to a first embodiment of the present invention.
FIG. 3 is a cross-sectional view of an electrode assembly of a rechargeable battery according to a second embodiment of the present invention.
FIG. 4 is a cross-sectional view of an electrode assembly of a rechargeable battery according to a third embodiment of the present invention.
FIG. 5 is a cross-sectional view of an electrode assembly of a rechargeable battery according to a fourth embodiment of the present invention.

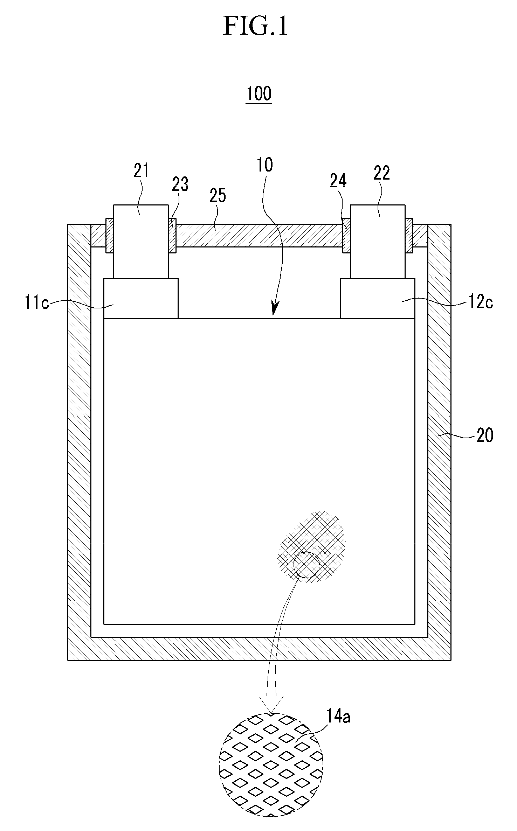

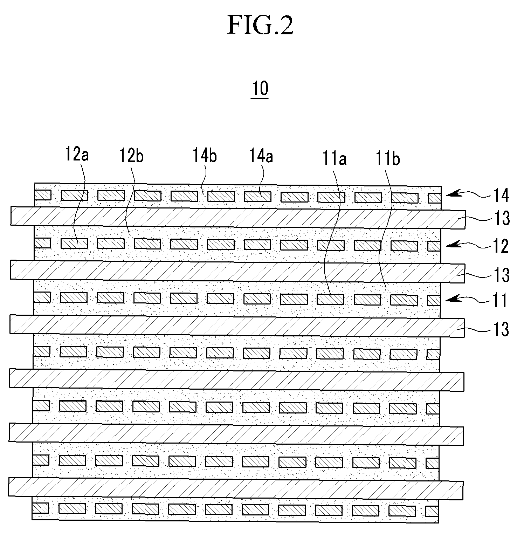

FIG. 1 is a cross-sectional view of a rechargeable battery according to a first embodiment of the present invention, and FIG. 2 is a cross-sectional view of an electrode assembly of a rechargeable battery according to a first embodiment of the present invention.

Referring to FIGS. 1 and FIG. 2, a rechargeable battery includes an electrode assembly 10 performing charge and discharge, and a case 20 housing the electrode assembly 10.

The case 20 forms the external appearance of the rechargeable battery 100 and provides space for housing the electrode assembly 10. For example, the case 20 may be formed in a film pouch or in a substantially rectangular shape having an opening for receiving the electrode assembly 10. In addition, the case 20 may be formed of a metal, such as aluminium, aluminium alloy, nickel-plated steel or the like or a pouch of laminate film. A cap assembly 25 may be mounted to the opening of the case 20, thereby sealing the case 20.

A positive terminal 21 and a negative terminal 22 are electrically connected to the electrode assembly 10, and the positive terminal 21 and the negative terminal 22 may protrude outside the case 20. The positive terminal 21 and the negative terminal 22 can be fixed by the cap assembly 25.

The positive terminal 21 is electrically connected to a positive uncoated region 11c, and the negative terminal 22 is electrically connected to a negative uncoated region 12c. The positive terminal 21 and the negative terminal 22 protrude outside the case 20, a first sealing member 23 is mounted between the positive terminal 21 and the case 20, and a second sealing member 24 is mounted between the negative terminal 22 and the case 20. The positive terminal 21 and the negative terminal 22 may protrude in the same direction, or may protrude in an opposite direction from each other.

The electrode assembly 10 includes a positive electrode 11, a negative electrode 12, and a separator 13 disposed between the positive electrode and the negative electrode. The electrode assembly 10 has a structure that a plurality of positive electrodes 11 and negative electrodes 12 are laminated with separators 13 in between.

The positive electrode 11 has a structure that positive active material layers 11b are formed on both surfaces of positive current collector 11a. The positive current collector 11a is formed of aluminium, stainless steel or the like and formed in a mesh square sheet formed of a plurality of pores, also referred to as openings. The positive active material layer 11b includes LiCoO₂, LiMnO₂, LiFePO₄, LiNiO₂, LiMn₂O₄, or the like, a conductive agent, a binder, and the like. The positive active material layer 11b may be coated on a positive current collector 11a or be attached thereon using a lamination method.

On the positive electrode 11, a positive uncoated region 11c where the positive current collector 11a is exposed is formed instead of the positive active material layer 11b.

The negative electrode 12 has a structure that negative active material layers 12b are formed on the both surfaces of negative current collector 12a. The negative current collector 12a is formed of copper, stainless steel, aluminum or the like and formed in a mesh square sheet having a plurality of pores. The negative active material layer 12b includes Li₄Ti₅O₁₂ or a carbon-based active material, a conductive agent, a binder or the like. On the negative electrode 12, a negative uncoated region 12c where the negative current collector 12a is exposed is formed instead of the negative active material layer 12b. The negative active material layer 12b may be coated on a negative current collector 12a or be attached thereon using a lamination method.

The separator 13 formed of a porous material insulates between the positive electrode 11 and the negative electrode 12 and provides a passage for ions.

A plurality of positive electrodes 11 and negative electrodes 12 are laminated with separators 13 in between. An outermost electrode 14 is disposed on the outermost side of electrode assembly 10. According to the present exemplary embodiment, the outermost electrode 14 is disposed adjacent to the negative electrode 12 with a separator 13 in between, so it acts as a positive electrode. However, the invention is not limited thereto, and the outermost electrode 14 may be formed to act as a negative electrode.

The outermost electrode 14 includes an outer current collector 14a and outer active material layers 14b formed on both surfaces of outer current collector 14a, and the outer active material layer 14b of the outermost electrode 14 is thinner than those of positive active material layer 11b. The outer current collector 14a and the outer active material layer 14b of outermost electrode 14 are respectively formed of the same material as in the positive current collector 11a and the positive active material layer 11b. The outer active material layer 14b may be about half as thick as the positive active material layer 11b. In other words, the amount of the outer active material layer 14b is the amount capable of reacting with negative active material layer 12b disposed on one surface of the adjacent negative electrode 12, so reducing its thickness may prevent unnecessary cost.

For example, the thickness of the positive active material layer 11b, and also a thickness of the negative active material layer 12b, may be 240 to 440µm, and further, may be 320 to 340µm. Also, for example, the thickness of the outer active material layer 14b may be 120 to 220µm, and further, may be 160 to 170µm. However, embodiments of the present invention are not limited to the above-described thicknesses and, in other embodiments, the positive active layer 11b, the negative active layer 12b, and the outer active layer 14b may have any other suitable thicknesses.

Furthermore, the volume of the outermost electrode is decreased compared to the other electrodes, and therefore the overall volume of the electrode assembly is decreased.

In addition, when the outer current collector 14a of outermost electrode 14 is formed in a mesh structure, all outer active material layers 14b disposed on both surfaces may participate in the charge and discharge reaction. In addition, as outer active material layers 14b are formed on both surfaces of outer current collector 14a, the outermost electrode 14 may be prevented from being distorted.

The mesh structure may, for example, be formed of diamond-shaped openings that have a short axis and a long axis, the long axis being between 0.8mm and 1.6mm long and the short axis being between 0.4mm and 1.2mm long. However, the shape and dimensions are not limited to this.

The size of the openings in the mesh current collector in the outermost electrode may be larger than the size of the openings in the mesh current collector in the electrodes other than the outermost electrode. A larger opening size in the outermost electrode allows for more adhesive to hold the active layer compared with other electrodes in the stack, where conductivity is more important than in the outermost electrode.

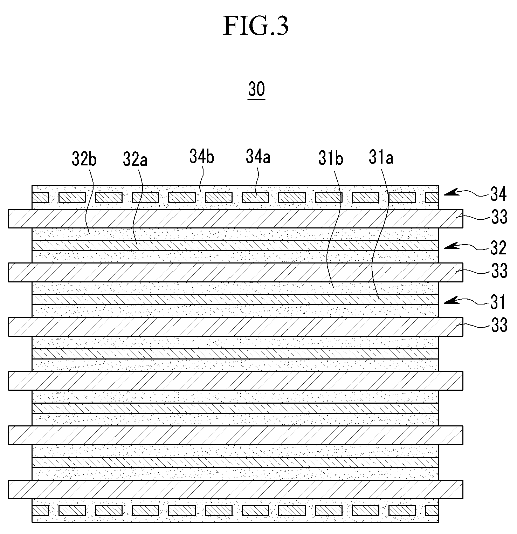

FIG. 3 is a cross-sectional view of an electrode assembly of a rechargeable battery according to a second embodiment of the present invention.

Referring to FIG. 3, the electrode assembly 30 according to the present exemplary embodiment includes a positive electrode 31, a negative electrode 32, a separator 33 disposed between the positive electrode 31 and the negative electrode 32, and the outermost electrode 34 disposed on the outermost side of electrode assembly 30.

A plurality of positive electrodes 31 and negative electrodes 32 are alternately laminated with separators 33 in between, and two outermost electrodes 34 are disposed on the outermost sides of electrode assembly 30. The outermost electrode 34 according to the present exemplary embodiment is disposed adjacent to the negative electrode 32 with the separator 33 between them, so it acts as a positive electrode.

The positive electrode 31 includes a positive current collector 31a and positive active material layers 31b formed on both surfaces of positive current collector 31a. The positive current collector 31a is formed of a flat sheet having no pores. The negative electrode 32 includes a negative current collector 32a and negative active material layers 32b formed on both surfaces of negative current collector 32a. The negative current collector 32a is formed of a flat sheet having no pores.

The outermost electrode 34 includes an outer current collector 34a and outer active material layers 34b formed on both surfaces of outer current collector 34a, and the outer current collector 34a is formed of mesh flat sheet having a plurality of pores. The outer active material layers 34b disposed on both surfaces of outermost electrode 34 are thinner than the active material layer 31b. The outer active material layer 34b is about half as thick as the active material layer 31b of the positive electrode.

Thereby, according to the present exemplary embodiment, the positive electrode 31 and negative electrode 32 include a current collector that is not a mesh current collector, but the outermost electrode 34 includes a mesh current collector. When the outermost electrode 34 includes the mesh current collector, the outer active material layers 34b disposed on both surfaces may participate in the charge and discharge process.

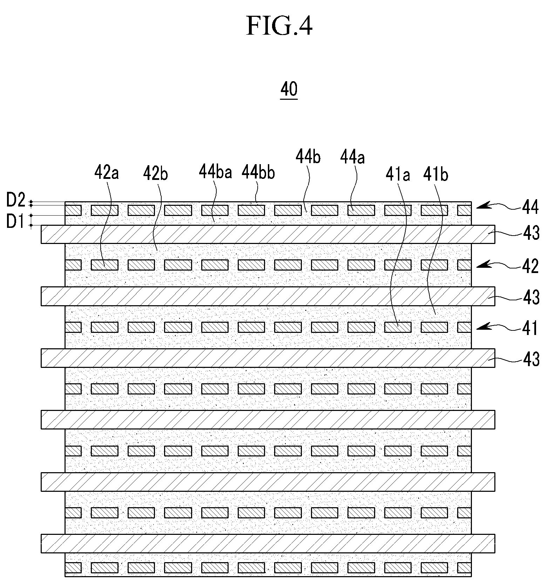

FIG. 4 is a cross-sectional view of an electrode assembly of a rechargeable battery according to a third embodiment of the present invention.

Referring to FIG. 4, the electrode assembly 40 according to the present exemplary embodiment includes a positive electrode 41, a negative electrode 42, a separator 43 disposed between the positive electrode 41 and the negative electrode 42, and an outermost electrode 44 disposed on the outermost side of electrode assembly 40.

A plurality of positive electrodes 41 and negative electrodes 42 are alternately laminated with separators 43 in between, and an outermost electrode 44 is disposed on each of the outermost sides of electrode assembly 40. The outermost electrode 44 according to the present exemplary embodiment is disposed adjacent to the negative electrode 42 with a separator 43 in between, so it acts as a positive electrode.

The positive electrode 41 includes a positive current collector 41a having a mesh structure and positive active material layers 41b formed on both surfaces of positive current collector 41a. The negative electrode 42 includes a negative current collector 42a having a mesh structure and negative active material layers 42b formed on both surfaces of negative current collector 42a.

The outermost electrode 44 includes an outer current collector 44a and outer active material layers 44b formed on both surfaces of outer current collector 44a, and the outer current collector 44a is formed of mesh flat sheet having a plurality of pores.

The outer active material layers 44b disposed on both surfaces of the outer current collector 44a are thinner than the active material layers 41b of positive electrode 41. The outer active material layer 44b of outermost electrode 44 is about half as thick as the active material layers 41b of positive electrode 41.

If the thickness of outer active material layer 44ba disposed between the outer current collector 44a and the separator 43 is referred to D1, and the thickness of outer active material layer 44bb disposed on the outer side of outer current collector 44a is referred to D2 in the outermost electrode 44, D1/D2 may range from 0.1 to 10. In other words, active material layers 44ba and 44bb may be formed to have the same thickness, or one active material layer is up to about 10 times thicker than the other active material layer.

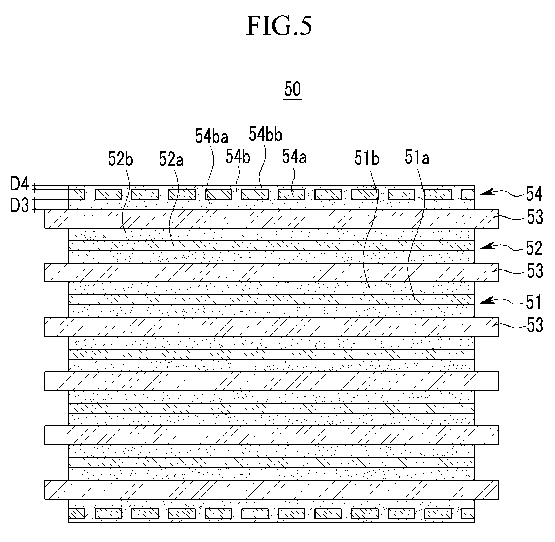

FIG. 5 is a cross-sectional view of an electrode assembly of a rechargeable battery according to a fourth embodiment of the present invention.

Referring to FIG. 5, the electrode assembly 50 according to the present exemplary embodiment includes a positive electrode 51, a negative electrode 52, a separator 53 disposed between the positive electrode 51 and the negative electrode 52, and an outermost electrode 54 disposed on the outermost side of electrode assembly 50.

A plurality of positive electrodes 51 and negative electrodes 52 are alternately laminated with separators 53 in between, and an outermost electrode 54 is disposed on each of the outermost sides of electrode assembly 50. The outermost electrode 54 according to the present exemplary embodiment is disposed adjacent to the negative electrode 52 with the separator 53 in between, so it acts as a positive electrode.

The positive electrode 51 includes a positive current collector 51a and positive active material layers 51b formed on both surfaces of positive current collector 51a. The positive current collector 51a is formed of a flat sheet having no pores. The negative electrode 52 includes a negative current collector 52a and negative active material layers 52b formed on both surfaces of negative current collector 52a. The negative current collector 52a is formed of a flat sheet having no pores.

The outermost electrode 54 includes an outer current collector 54a and outer active material layers 54b formed on both surfaces of outer current collector 54a, and the outer current collector 54a is formed of a mesh flat sheet having a plurality of pores. The outer active material layers 54b are thinner than the active material layer 51b. The outer active material layer 54b is about half as thick as the active material layer 51b of the positive electrode.

If the thickness of outer active material layer 54ba disposed between the outer current collector 54a and the separator 53 is referred to D3, and the thickness of outer active material layer 54bb disposed on the outer side of outer current collector 54a is referred to D4 in the outermost electrode 54, D2/D3 may range from 0.1 to 10. In other words, active material layers 54ba and 54bb disposed on both surfaces of outer current collector 54a in the outermost electrode 54 may be formed to have the same thickness, or one active material layer is up to about 10 times thicker than the other active material layer.

While the invention has been described in connection with what are presently considered to be practical exemplary embodiments, it is to be understood that the invention is not limited to the disclosed embodiments, but, on the contrary, is intended to cover various modifications and equivalent arrangements included within the scope of the appended claims.

## Claims

1. An electrode assembly for a rechargeable battery, comprising:
a plurality of positive and negative electrodes (11, 12, 14, 31, 32, 34, 41, 42, 44, 51, 52, 54) in the form of a stack, adjacent positive and negative electrodes having a separator (13, 33, 43, 53) between them;
each of the positive and negative electrodes comprising a current collector (11a, 14a, 34a, 44a, 54a) and an active material layer (11b, 14b, 34b, 44b, 54b) on the current collector, wherein:
an outermost electrode in the stack comprises a first active material layer on both sides of the current collector, and the thickness of the first active material layer (14b, 34b, 44b, 54b) in the outermost electrode (14, 34, 44, 54) is less than the thickness of a second active material layer (11b, 31b, 41b, 51b) in an electrode other than the outermost electrode,
wherein the current collectors of the electrodes are in the form of a mesh, and the size of the openings in the mesh current collector in the outermost electrode is larger than the size of the openings in the mesh current collector in the electrodes other than the outermost electrode, and
wherein the first active material layer in the outermost electrode comprises a third active material layer (44ba, 54ba) on one side of the current collector and a fourth active material layer (44bb, 54bb) on the other side of the current collector, and the thickness of the first active material layer (14b, 34b, 44b, 54b) in the outermost electrode (14, 34, 44, 54) is the sum of the thickness of the third active material layer (44ba, 54ba) and the thickness of the fourth active material layer (44bb, 54bb).

2. The electrode assembly of claim 1, wherein the first active material layer is about half as thick as the second active material layer.

3. The electrode assembly of claim 1 or 2, wherein the openings in the mesh current collector in the outermost electrode are diamond-shaped.

4. The electrode assembly of any one of the preceding claims, wherein the third and fourth active material layers have different thicknesses.

5. The electrode assembly of any one of the preceding claims, wherein the ratio of the thicknesses of the third active material layer to the fourth active material layer is between about 1:10 and about 10:1.

6. The electrode assembly of any one of claims 1 to 4, wherein the ratio of the thicknesses of the third active material layer to the fourth active material layer is between about 1:3 and about 3:1.

7. The electrode assembly of any one of claims 1 to 4, wherein the ratio of the thicknesses of the third active material layer to the fourth active material layer is between about 1:2 and about 2:1.

8. The electrode assembly of any one of the preceding claims, wherein the first active material layer and the second active material layer comprise a positive active material.

9. A rechargeable battery comprising:
a case (20);
an electrode assembly (10) according to any one of the preceding claims in the case.

## Patentansprüche

1. Elektrodenanordnung für eine wiederaufladbare Batterie, umfassend:
eine Mehrzahl von positiven und negativen Elektroden (11, 12, 14, 31, 32, 34, 41, 42, 44, 51, 52, 54) in Form eines Stapels, wobei benachbarte positive und negative Elektroden einen Separator (13, 33, 43, 53) zwischen sich haben,
wobei jede der positiven und negativen Elektroden einen Stromsammler (11a, 14a, 34a, 44a, 54a) und eine Füllmassenschicht (11 b, 14b, 34b, 44b, 54b) auf dem Stromsammler umfasst, wobei:
eine äußerste Elektrode in dem Stapel eine erste Füllmassenschicht auf beiden Seiten des Stromsammlers umfasst und die Dicke der ersten Füllmassenschicht (14b, 34b, 44b, 54b) in der äußersten Elektrode (14, 34, 44, 54) geringer ist als die Dicke einer zweiten Füllmassenschicht (11 b, 31 b, 41 b, 51 b) in einer Elektrode, die nicht die äußerste Elektrode ist,
wobei die Stromsammler der Elektroden in Maschenform vorliegen und die Größe der Öffnungen in dem Maschenstromsammler in der äußersten Elektrode größer ist als die Größe der Öffnungen in dem Maschenstromsammler in den Elektroden, die nicht die äußerste Elektrode sind, und
wobei die erste Füllmassenschicht in der äußersten Elektrode eine dritte Füllmassenschicht (44ba, 54ba) auf einer Seite des Stromsammlers und eine vierte Füllmassenschicht (44bb, 54bb) auf der anderen Seite des Stromsammlers umfasst und die Dicke der ersten Füllmassenschicht (14b, 34b, 44b, 54b) in der äußersten Elektrode (14, 34, 44, 54) die Summe der Dicke der dritten Füllmassenschicht (44ba, 54ba) und der Dicke der vierten Füllmassenschicht (44bb, 54bb) ist.

2. Die Elektrodenanordnung nach Anspruch 1, wobei die erste Füllmassenschicht ungefähr halb so dick wie die zweite Füllmassenschicht ist.

3. Die Elektrodenanordnung nach Anspruch 1 oder 2, wobei die Öffnungen in dem Maschenstromsammler in der äußersten Elektrode rautenförmig sind.

4. Die Elektrodenanordnung nach einem der vorangehenden Ansprüche, wobei die dritte Füllmassenschicht und die vierte Füllmassenschicht unterschiedliche Dicken haben.

5. Die Elektrodenanordnung nach einem der vorangehenden Ansprüche, wobei das Verhältnis der Dicke der dritten Füllmassenschicht zu der Dicke der vierten Füllmassenschicht zwischen ungefähr 1:10 und ungefähr 10:1 beträgt.

6. Die Elektrodenanordnung nach einem der Ansprüche 1 bis 4, wobei das Verhältnis der Dicke der dritten Füllmassenschicht zu der Dicke der vierten Füllmassenschicht zwischen ungefähr 1:3 und ungefähr 3:1 beträgt.

7. Die Elektrodenanordnung nach einem der Ansprüche 1 bis 4, wobei das Verhältnis der Dicke der dritten Füllmassenschicht zu der Dicke der vierten Füllmassenschicht zwischen ungefähr 1:2 und ungefähr 2:1 beträgt.

8. Die Elektrodenanordnung nach einem der vorangehenden Ansprüche, wobei die erste Füllmassenschicht und die zweite Füllmassenschicht eine positive Füllmasse umfassen.

9. Eine wiederaufladbare Batterie, umfassend:
ein Gehäuse (20),
eine Elektrodenanordnung (10) nach einem der vorangehenden Ansprüche in dem Gehäuse.

## Revendications

1. Ensemble d'électrodes pour une batterie rechargeable, comprenant :
une pluralité d'électrodes positives et négatives (11, 12, 14, 31, 32, 34, 41, 42, 44, 51, 52, 54) sous la forme d'une pile, les électrodes positives et négatives adjacentes ayant un séparateur (13, 33, 43, 53) entre elles ;
chacune des électrodes positives et négatives comprenant un collecteur de courant (11a, 14a, 34a, 44a, 54a) et une couche de matériau actif (11b, 14b, 34b, 44b, 54b) sur le collecteur de courant, dans lequel :
une électrode la plus à l'extérieur dans la pile comprend une première couche de matériau actif des deux côtés du collecteur de courant, et l'épaisseur de la première couche de matériau actif (14b, 34b, 44b, 54b) dans l'électrode la plus à l'extérieur (14, 34, 44, 54) est inférieure à l'épaisseur d'une deuxième couche de matériau actif (11b, 31b, 41b, 51b) dans une électrode autre que l'électrode la plus à l'extérieur,
dans lequel les collecteurs de courant des électrodes sont sous la forme d'un maillage, et la taille des ouvertures dans le collecteur de courant maillé dans l'électrode la plus à l'extérieur est plus grande que la taille des ouvertures dans le collecteur de courant maillé dans les électrodes autres que l'électrode la plus à l'extérieur, et
dans lequel la première couche de matériau actif dans l'électrode la plus à l'extérieur comprend une troisième couche de matériau actif (44ba, 54ba) d'un côté du collecteur de courant et une quatrième couche de matériau actif (44bb, 54bb) de l'autre côté du collecteur de courant, et l'épaisseur de la première couche de matériau actif (14b, 34b, 44b, 54b) dans l'électrode la plus à l'extérieur (14, 34, 44, 54) est la somme de l'épaisseur de la troisième couche de matériau actif (44ba, 54ba) et de l'épaisseur de la quatrième couche de matériau actif (44bb, 54bb).

2. Ensemble d'électrodes selon la revendication 1, dans lequel l'épaisseur de la première couche de matériau actif est égale à environ la moitié de l'épaisseur de la deuxième couche de matériau actif.

3. Ensemble d'électrodes selon la revendication 1 ou 2, dans lequel les ouvertures dans le collecteur de courant maillé dans l'électrode la plus à l'extérieur ont une forme de losange.

4. Ensemble d'électrodes selon l'une quelconque des revendications précédentes, dans lequel les troisième et quatrième couches de matériau actif ont différentes épaisseurs.

5. Ensemble d'électrodes selon l'une quelconque des revendications précédentes, dans lequel le rapport entre les épaisseurs de la troisième couche de matériau actif et de la quatrième couche de matériau actif est entre environ 1:10 et environ 10:1.

6. Ensemble d'électrodes selon l'une quelconque des revendications 1 à 4, dans lequel le rapport entre les épaisseurs de la troisième couche de matériau actif et de la quatrième couche de matériau actif est entre environ 1:3 et environ 3:1.

7. Ensemble d'électrodes selon l'une quelconque des revendications 1 à 4, dans lequel le rapport entre les épaisseurs de la troisième couche de matériau actif et de la quatrième couche de matériau actif est entre environ 1:2 et environ 2:1.

8. Ensemble d'électrodes selon l'une quelconque des revendications précédentes, dans lequel la première couche de matériau actif et la deuxième couche de matériau actif comprennent un matériau actif positif.

9. Batterie rechargeable comprenant :
un boîtier (20) ;
un ensemble d'électrodes (10) selon l'une quelconque des revendications précédentes dans le boîtier.
